# EUROPÄISCHE PATENTSCHRIFT

(11) **EP 1 023 825 B1**
(45) Veröffentlichungstag und Bekanntmachung des Hinweises auf die Patenterteilung: **12.11.2003**
(21) Anmeldenummer: 00101541.1
(22) Anmeldetag: 27.01.2000
(51) Int. Cl.: A01D 34/66, A01D 34/64

(54) **Aufhängung und Arbeitsgerät bzw. Fahrzeug**
Suspension and working device or vehicle
Suspension et dispositif de travail ou véhicule

(30) Priorität: 29.01.1999 US 240255
(43) Veröffentlichungstag der Anmeldung: 02.08.2000
(73) Patentinhaber: DEERE & COMPANY, Moline, Illinois 61265-8098 (US)
(72) Erfinder: O'Neill, Michael Jerome, Mayville, WI 53050 (US); Radloff, Larry Ray, Horicon, WI 53032 (US); Alles, Matthew John, Kewaskum, WI 53040 (US)
(74) Vertreter: Magin, Ludwig Bernhard

(56) Entgegenhaltungen:
- EP-A- 0 262 285
- GB-A- 2 048 638
- US-A- 2 859 578
- US-A- 3 611 682
- US-A- 5 241 808
- US-A- 5 533 326

## Beschreibung

Die Erfindung betrifft eine Aufhängung mit zumindest einem Tragarm, der um eine erste Achse schwenkbar gelagert ist und durch zumindest eine Verstelleinrichtung in verschiedene Stellungen gebracht werden kann, mit zumindest einem Stützhebel, der um die erste Achse schwenkbar gelagert ist und über von seiner Schwenkachse beabstandete Mittel mit dem Tragarm in Verbindung steht, die zumindest eine vertikale Relativbewegung des Tragarms bezogen auf den Stützhebel ermöglichen, sowie ein Arbeitsgerät bzw. ein Fahrzeug.

Fahrzeuge bzw. Geräte zur Rasen-, Garten- bzw. Grundstückspflege sind üblicherweise mit zusätzlichen Anbaueinrichtungen verbindbar. Beispielsweise werden häufig vordere Mähwerke, vordere Messer und andere gängige Anbaueinrichtungen verwendet. Oftmals sind diese Anbaueinrichtungen entweder verhältnismäßig fest mit dem Rahmen des Fahrzeugs bzw. des Geräts verbunden, wodurch nur ein geringes oder keinerlei seitliches Verschwenken der Anbaueinrichtung erlaubt wird. Sie können aber auch mit einer Aufhängung ausgestattet sein, die einen gewissen Grad an seitlicher Verschwenkbarkeit der Anbaueinrichtung erlaubt, um es der Anbaueinrichtung zu ermöglichen, der Kontur des Untergrunds, über die es hinweggelangt, zu folgen.

Eine übliche Aufhängung, wie sie in dem John Deere Parts Ersatzteilkatalog PC2319, Seite 156 für F710 und F725 Front Mowers gesehen werden kann, benutzt einen einzelnen Anhebezylinder, um die Anbaueinrichtung anzuheben und abzusenken. Ein Paar von Tragarmen ist einenends schwenkbar mit einem Fahrzeug und andernends mit der Anbaueinrichtung verbindbar. Der Tragarm ist mit einem Anhebehebel verbunden, der sich zwischen den beiden Tragarmen erstreckt. Ein Maß an seitlicher Verschwenkbarkeit der Anbaueinrichtung wird durch die Verwendung von Kugelgelenken an jeder Seite der Tragarme, an der die Tragarme mit dem Fahrzeug und der Anbaueinrichtung verbunden sind, erzielt.

Eine andere übliche Aufhängung, wie sie in der US-A-5,321,938 gezeigt wird, nutzt zwei Anhebezylinder, die mit einer Anbaueinrichtung an gegenüberliegenden Enden verbunden sind, um die Anbaueinrichtung in eine gewünschte Stellung anzuheben oder abzusenken. Wenn das Fahrzeug und die Anbaueinrichtung über den Untergrund gelangen, können die Anhebezylinder eine Schwimmstellung einnehmen, in der die Anhebezylinder sich innerhalb ihres normalen Bewegungsbereichs frei ausdehnen und zusammenziehen können, wodurch es der Anbaueinrichtung ermöglicht wird, seitlich zu verschwenken, so daß die gegenüberliegenden Enden der Anbaueinrichtung sich unabhängig nach oben oder unten bewegen können, um der Kontur des Untergrunds zu folgen. Die Benutzung von zwei Anhebezylindern hat eine wesentliche Erhöhung der Kosten und des Instandhaltungsaufwands gegenüber einer Aufhängung, die nur einen Anhebezylinder verwendet, zur Folge.

Die US-A-5,241,808 zeigt ein Mähgerät mit einer Aufhängung für eine Mäheinheit, welche einen zweiteiligen, höhenverstellbaren Tragarm aufweist. Der Tragarm ist mit einem Hydraulikmotor derart über eine Hebel verbunden, dass der Tragarm unabhängig von dem Hebel vertikal nach oben bewegen kann.

Das der Erfindung zugrunde liegende Problem wird in der unzureichenden Funktion bzw. der aufwendigen Ausführung bekannter Aufhängungen für Anbaueinrichtungen und der mit diesen ausgestatteten Fahrzeugen bzw. Geräten gesehen.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise kann ein großes Maß an Beweglichkeit der Tragarme ermöglicht und dabei gewährleistet werden, daß sich die Tragarme während eines Betriebs und auch bei einem Abheben vom Untergrund nur in einem vorgegebenen Bereich bewegen können, so daß keine unkontrollierten Bewegungen beispielsweise bei einem Transport oder einem verhältnismäßig schnellen Wechsel des Einsatzortes etc. auftreten können. Zu einer Bewegung bzw. einem Verschwenken des Stützhebels kommt es im Betrieb erst, wenn der durch die Mittel begrenzte Bewegungsbereich ausgeschöpft ist. Der Bewegungsbereich des Tragarms kann durch Anschläge, die zumindest in vertikaler Richtung beabstandet sind, begrenzt werden, so daß sie für ein Tragelement, das beispielsweise durch eine Welle oder einen Stift bzw. Bolzen gebildet wird, einen oberen und einen unteren Anschlag zur Verfügung stellen. Die Anschläge können zusätzlich aber auch in horizontaler Richtung beabstandet sein. Die Bewegungsfreiheit bzw. der Grad an Beweglichkeit des Tragelements kann durch die Wahl des Abstands zwischen den ersten Anschlägen, aber auch durch den Durchmesser bzw. die Dimensionierung des Tragelements beeinflußt werden.

Aufhängungen können beispielsweise an Fahrzeugen zur Rasen-, Garten- bzw. Grundstückspflege eingesetzt werden. Dies können beispielsweise Mähgeräte sein, aber auch der Einsatz an Kehrmaschinen oder Schneeräumgeräten ist denkbar. Allgemein kann eine solche Aufhängung an Fahrzeugen oder Arbeitsgeräten, beispielsweise handgeschobenen oder handgeführten Geräten vorgesehen sein, an die Anbaueinrichtungen in Form von Zusatz- bzw. Anbaugeräten angebracht werden können und die ein gewisses Maß an Beweglichkeit aufweisen sollen, um beispielsweise der Kontur des Untergrunds zu folgen.

Mittels eines weiteren Anschlags, der von den ersten Anschlägen zumindest in horizontaler Richtung beabstandet ist, kann zusätzlich eine Kippbewegung des Tragelements begrenzt werden. Der horizontale Abstand des zweiten Anschlags kann in Abhängigkeit von der übrigen Geometrie der Aufhängung gewählt werden. Beispielsweise kann es vorteilhaft sein, den zweiten Anschlag auf gleicher Höhe mit einem der ersten Anschläge vorzusehen, beispielsweise wenn das Tragelement und die Anschläge derart angeordnet sind, daß das Tragelement um einen Symmetriepunkt bzw. eine Symmetrieachse zwischen den Anschlägen kippen bzw. pendeln kann. Es können auch zwei oder mehr zweite Anschläge vorgesehen sein.

Die Anschläge können als einzelne Bauteile vorgesehen sein. Es ist aber auch denkbar, entweder die Mittel oder das Tragelement in der Art einer Hülse, Buchse, Manschette oder allgemein einer Aussparung in einem Bauteil beispielsweise direkt in dem Tragarm vorzusehen, so daß die Anschläge durch die Innen- bzw. Außenumfangsfläche bestimmt werden.

Zwischen der Hülse und dem Tragelement kann ein Freiraum vorgesehen sein, so daß diese ihre Lage zueinander bzw. ineinander verändern können, wodurch die Bewegungsmöglichkeiten der Aufhängung bestimmt werden.

Die Verstelleinrichtung, kann beispielsweise als ein Hydraulikmotor oder Pneumatikmotor mit einem in einem Zylinder angeordneten Kolben oder auch durch ein Spindel- oder Zahnstangengetriebe oder auch in sehr einfacher Weise durch einen rein manuell oder über Umlenkeinrichtungen zu betätigenden Griff oder Hebel gebildet werden. Diese Verstelleinrichtung kann an dem/den Tragarmen angreifen. Vorzugsweise greift sie aber direkt oder indirekt an dem Stützhebel an.

Die Aufhängung kann auch zwei oder mehr Tragarme aufweisen, die sich bezogen auf den Stützhebel gemeinsam oder unabhängig voneinander bewegen können. Es kann vorgesehen sein, daß die Tragarme über ein gemeinsames Tragelement beispielsweise in der Art einer Welle oder jeweils ein einzelnes Tragelement verfügen.

Die Tragarme können jeweils mit einem Stützhebel in Verbindung stehen. Vorteilhaft ist es aber, wenn sie einen gemeinsamen Stützhebel aufweisen, der vorzugsweise zwischen den Tragarmen angeordnet ist. Dies kann bewirken, daß der Bewegungsbereich der Tragarme durch den Stützhebel in einer Abhängigkeit gehalten wird, so daß durch eine Verstellung eines der Tragarme beispielsweise bei einem Anheben in eine Transportstellung, der andere bzw. die anderen Tragarme ebenfalls mit angehoben werden.

An die Tragarme können eine oder mehrere Anbaueinrichtung beispielsweise in der Art von Mähwerken, Kehreinrichtungen oder Räumeinrichtungen angebaut werden. Auch die Größe dieser Anbaueinrichtung beeinflußt die Bewegungsmöglichkeiten insofern, als der Abstand zwischen den Anschlägen und der äußeren Kontur der Anbaueinrichtung die maximal mögliche Schwenkhöhendifferenz der Aufhängung bzw. der Anbaueinrichtung bestimmt. Günstig ist es, wenn die Aufhängung zusätzlich eine Höheneinstelleinrichtung aufweist, über die beispielsweise der Abstand der Tragarme bzw. der Anbaueinrichtung vom Untergrund reguliert bzw. verändert werden kann. Über eine solche Höheneinstelleinrichtung kann eine Anbaueinrichtung auch derart an dem Tragarm oder an den Tragarmen angeschlossen sein, daß sich eine oder mehrere Bewegungsmöglichkeit(en) der Anbaueinrichtung bezogen auf die Tragarme bzw. die Trageinheit ergibt/ergeben.

Eine solche Aufhängung kann an einem Arbeitsgerät oder auch an einem Fahrzeug eingesetzt werden, wenn an diesen eine Anbaueinrichtung oder allgemein eine Zusatzeinrichtung vorgesehen sein soll, die eine gewisse Bewegungsmöglichkeit aufweist, um beispielsweise der Kontur des Untergrunds besser folgen zu können, so daß Beschädigungen durch auf die Anbaueinrichtung einwirkende Kräfte oder Kollisionen vorgebeugt werden kann. Solche Geräte können handgeschobene oder auch handgeführte Geräte oder auch Fahrzeuge zur Rasen-, Garten- bzw. Grundstückspflege sein, an die Anbaueinrichtungen, wie Mäh-, Kehr- oder Räumeinrichtungen angeschlossen werden können. Auch die Verwendung an landwirtschaftlichen oder industriellen Geräten bzw. Fahrzeugen mit ähnlichen Anforderungen ist denkbar.

In der Zeichnung sind zwei nachfolgend näher beschriebene Ausführungsbeispiele der Erfindung dargestellt. Es zeigt:
- Fig. 1: eine teilweise, perspektivische Ansicht einer Aufhängung für eine Anbaueinrichtung, mittels derer ein Mähwerk an einem Fahrzeug angebracht ist,
- Fig. 2: eine Explosionsdarstellung der in Fig. 1 gezeigten Aufhängung,
- Fig. 3: eine Frontansicht eines Mähwerks die die Fähigkeit des seitlichen Verschwenkens der Aufhängung aus Fig.1 zeigt,
- Fig. 4: eine vergrößerte Ansicht der Aufhängung, die die Stellung einer Freilaufkupplung zeigt, wenn das Mähwerk sich in der in Fig. 3 gezeigten Stellung befindet und
- Fig. 5: eine Explosionsdarstellung einer Aufhängung entsprechend einer alternativen Ausführung der vorliegenden Erfindung.

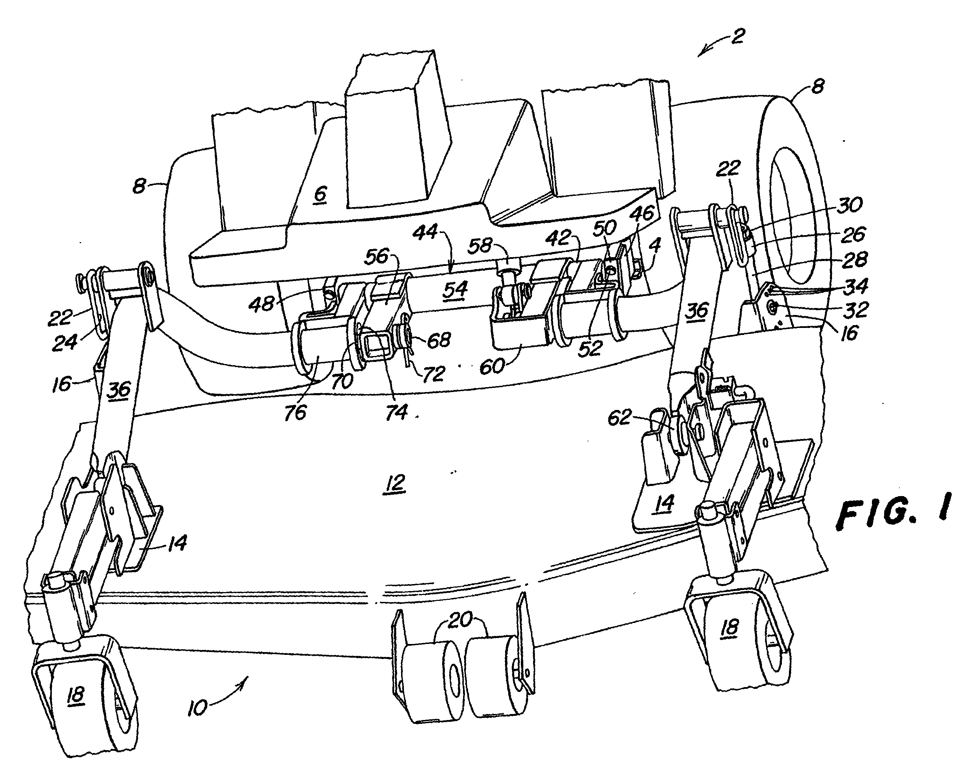

In Figur 1 ist ein Antriebsfahrzeug bzw. Fahrzeug 2 von üblicher Bauart teilweise dargestellt. Das Fahrzeug 2 weist einen Rahmen 4 und einen Fahrzeugkorpus 6 auf, der betriebsfähig von einem Satz von vier Rädern 8 getragen wird, von denen nur die vorderen Räder 8 in Figur 1 gezeigt werden. Das Fahrzeug 2 kann jede übliche Art von selbst angetriebenem, mehrrädrigem oder mit Raupen ausgestattetem Fahrzeug oder Schlepper oder ähnlichem sein und welches wirksam während des Betriebs durch die Steuerung einer Bedienungsperson manövrieren kann. Das Fahrzeug 2 wird üblicherweise zumindest zwei Räder aufweisen, welche durch eine Bedienungsperson durch eine Bewegung eines Lenkrades oder Steuerhebels verschwenkt werden können. Die schwenkenden Räder können die vorderen Räder 8, die rückwärtigen Räder oder alle vier Räder sein.

Der Rahmen 4 des Fahrzeugs 2 ist daran angepaßt, ein Anbaugerät wie ein in Figur 1 gezeigtes vorne angebrachtes Mähwerk 10 aufzunehmen. Das Mähwerk 10 weist ein Gehäuse 12 auf, welches üblicherweise eine Mehrzahl rotierender Mähblätter bedeckt, die mit einem Antriebsmechanismus (nicht gezeigt) verbunden sind. Der Antriebsmechanismus wiederum kann beispielsweise mit einer PTO Welle oder einem Hydrauliksystem des Fahrzeugs 2 verbunden sein. Das Gehäuse 12 weist ein Paar von Haltern 14 zur Aufnahme von Tragarmen 36 und ein Paar rückwärtiger Höheneinstellungsplatten 16 auf, wobei jeweils eine an gegenüberliegenden Seiten des Gehäuses aufgesetzt ist.

Ein Paar von Nachlaufrädern 18 ist an gegenüberliegenden Seiten des Vorderbereichs des Gehäuses 12 angebracht. Um es dem Mähwerk 10 zu erlauben, der Kontur des Untergrunds dicht zu folgen, wenn sich das Fahrzeug 2 und das angebrachte Mähdeck 10 über den Boden bewegen, kann der rückwärtige Bereich des Gehäuses 12 zusätzliche Merkmale, wie ein Einschneiden in den Untergrund verhindernde Rollen bzw. Stützrollen (entsprechend den Rollen 20, die an dem Vorderbereich des Gehäuses 12 dargestellt sind) oder Spurräder (nicht gezeigt), wie sie durch den Stand der Technik bekannt sind, aufweisen. Vorzugsweise ist das Mähwerk 10 derart ausgebildet und an dem Rahmen 4 des Fahrzeugs 2 aufgehängt, so daß die Räder 8 des Fahrzeugs 2 dem rückwärtigen Bereich des Gehäuses 12 dicht nachfolgen, so daß der Bedarf rückwärtiger Spurräder ausgeschlossen wird.

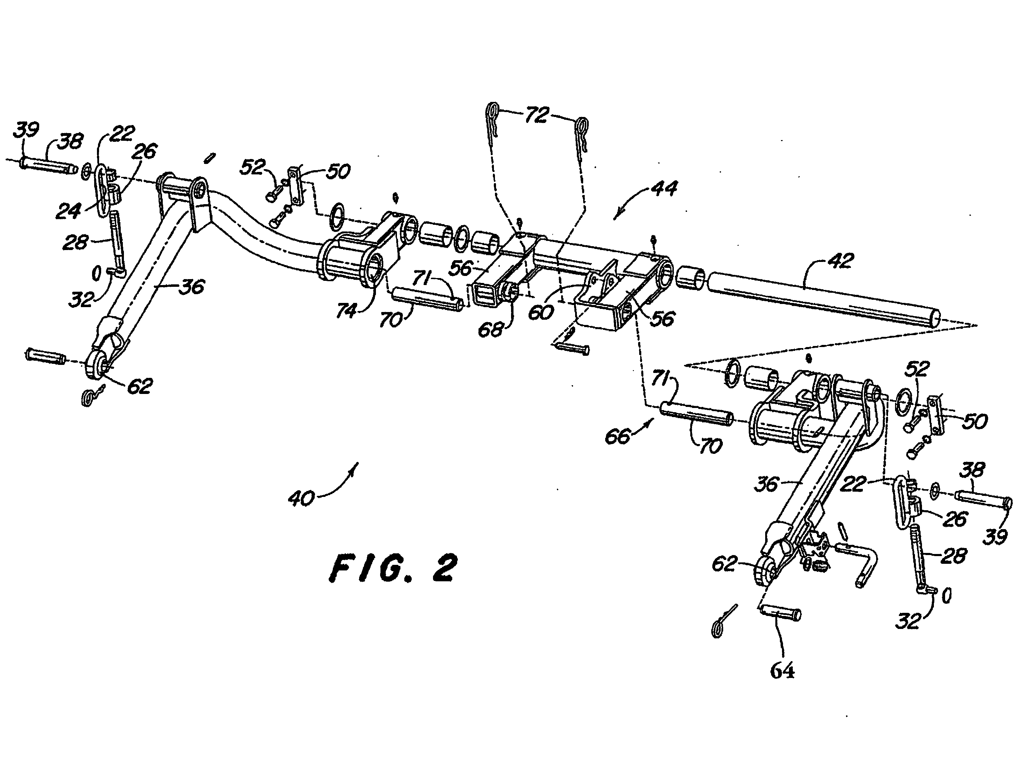

Bezugnehmend auf die Figuren 1 und 2 weist das Mähwerk 10 auch eine Höheneinstellungseinrichtung zum Einstellen der Schnitthöhe an beiden Seiten an sowohl dem vorderen Bereich und dem rückwärtigen Bereich des Mähwerks 10 auf. Die vordere Schnitthöhe kann über übliche Methoden, beispielsweise durch ein Hinzufügen oder Entfernen von Abstandhaltern (nicht gezeigt) an der Befestigungsstelle der Spurräder 18 an dem Gehäuse 12, eingestellt werden. Die rückwärtige Schnitthöheneinstellung weist auf jeder Seite des Mähwerks 10 eine längliche Aufhängung 22 mit einem länglichen Schlitz 24 auf. Auf jeder Seite ist die längliche Aufhängung 22 an eine nach innen gebogenen Hülse 26 angeschweißt, welche einen gebogenen Bereich eines L-förmigen Bügels 28 aufnimmt. Eine Kreuzloch- bzw. Sperrmutter 30 hält eine gewünschte Beziehung zwischen dem Bügel 28 und der Aufhängung 22 aufrecht. Ein Basisabschnitt 32 des L-förmigen Bügels 28 ist in einer von mehreren Aussparungen 34 in der rückwärtigen Höheneinstellungsplatte 16 angeordnet, welche fest mit dem Gehäuse 12 verbunden ist. Die Aufhängung 22 ist mit einem Tragarm 36 über einen rückwärtigen Aufhängungsstift 38 verbunden, der ein umgebördeltes Ende 39 aufweist, welcher in den länglichen Schlitz 24 der Aufhängung eingesetzt ist. Diese Anordnung bewirkt eine minimale Höhe des rückwärtigen Bereichs des Mähwerks 10, während sie einen gewissen Grad an Verschwenken in Längsrichtung sowie ein begrenztes Maß an seitlichem Verschwenken des Mähwerks 10 ermöglicht.

Das Bezugszeichen 40 benennt allgemein eine Anbaugerätaufhängung bzw. Aufhängung entsprechend der vorliegenden Erfindung. Die Aufhängung 40 dient dazu, das Mähwerk 10 zu unterstützen und das Mähdeck 10 an dem Rahmen 4 des Fahrzeugs 2 zu sichern. Die Aufhängung 40 ist in Figur 2 in Explosionsdarstellung gezeigt und weist eine querliegende Schwenkwelle 42 auf, über die die beiden Tragarme 36 und ein C-förmiger Stützhebel **44** schwenkbar angebracht sind. Wie es in Figur 1 dargestellt wird, ist die Schwenkwelle 42 an dem Rahmen 4 des Fahrzeugs 2 in einem Bereich des Rahmens 4 angebracht, der zwei Halteblöcke 46 mit u-förmigen Kanälen 48 umfaßt, in denen die Schwenkwelle 42 angeordnet ist. Rückhalteplatten 50 sind über den Kanälen 48 mittels Schrauben 52 befestigt, um die Schwenkwelle 42 in ihrer Position zu halten.

Der Stützhebel 44 weist einen hohlen Basisbereich 54, welcher über die Schwenkwelle 42 geschoben werden kann, und zwei Seitenbereiche 56 auf, welche sich von der Schwenkwelle 42 nach vorne erstrecken. Ein hydraulischer Hebezylinder, Hydraulikmotor bzw. eine Verstelleinrichtung 58 von üblicher Bauart ist an einem Ende an einer Halterung 60 an einem der Seitenbereiche 56 des Stützhebels 44 und an einem anderen Ende an dem Rahmen 4 des Fahrzeugs 2 angebracht.

An einem Ende jedes Tragarms 36, dem Ende des Tragarms 36 gegenüberliegend, der an der Schwenkwelle 42 angebracht ist, dient ein Gelenk 62 als ein Universalgelenk, um den Tragarm 36 mit dem Gehäuse 12 zu verbinden, während es eine begrenzte relative Bewegung gestattet. Ein Stift 64 sichert das Gelenk 62 (und den daran angebrachten Tragarm 36) an dem Mähwerk 10 an einer/einem entsprechenden der Tragarmhalterungen bzw. der Halter 14.

Die Aufhängung 40 weist eine Freilaufkupplung 66 auf, um eine begrenzte unabhängige Bewegung jedes der Tragarme 36 bezogen auf den Stützhebel 44 zu erlauben. Die Freilaufkupplung 66 weist Aussparungen 68 in einem Mittenbereich jedes der Seitenbereiche 56 des Stützhebels 44 auf, durch welche Tragelemente, Stifte bzw. Bolzen 70 positioniert sind. Die Tragelemente 70 haben jeweils eine Querbohrung 71, durch die Sicherungsstifte 72 gesteckt sind, um die Tragelemente bzw. Bolzen 70 an ihrem Platz zu sichern. Eine entsprechende Aussparung 74 in einem angrenzenden Bereich jedes der Tragarme 36 erlaubt es den Tragelementen bzw. Stiften 70, von den Tragarmen 36 derart aufgenommen zu werden, daß das hohle Innere jedes der Tragarme 36 als eine Hülse zur Aufnahme eines entsprechenden Tragelements 70 dient. Wie es in Figur 1 gezeigt wird, umfassen die Aussparungen 74 das hohle Innere eines sich quererstreckenden Bereichs 76 jedes der Tragarme 36. In einer bevorzugten Ausführungsform weisen die Aussparungen 74 einen inneren Durchmesser von 4,445 cm (1,75 inch) auf, wobei jeder der Stifte 70 einen Außendurchmesser von etwa 2,54 cm (1 inch) aufweist. Verschiedene Größen von Tragelementen 70 können mit einer Aussparung 74 bestimmter Größe verwendet werden, um einen gewünschten Grad von seitlicher Verschwenkbarkeit zu erzielen, wie auch der Grad an Zwischenraum zwischen der Aussparung 74 und dem Tragelement 70 das Maß durch das Anbaugerät erreichbarer seitlicher Verlagerung bestimmt wird. Das Maß an vertikaler Verschwenkbarkeit, das an jeder Seite des Anbaugeräts bzw. der Anbaueinrichtung erlaubt ist, wird von der Entfernung zwischen der Freilaufkupplung 66 und dem äußeren Ende des Anbaugeräts abhängen. Der seitliche Abstand zwischen den äußeren Enden des Anbaugeräts nach außen und der Freilaufkupplung 66 zeigt eine Geometrie, die eine größere Bewegung an den Enden der Anbaueinrichtung erlaubt, als diese an der Freilaufkupplung 66 zwischen dem Tragelement 70 und der Aussparung 74 erhältlich ist.

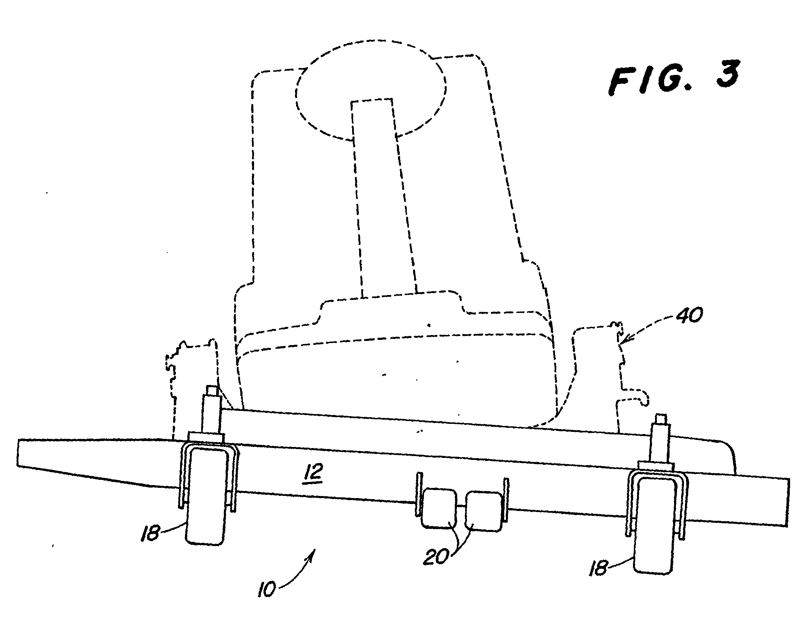

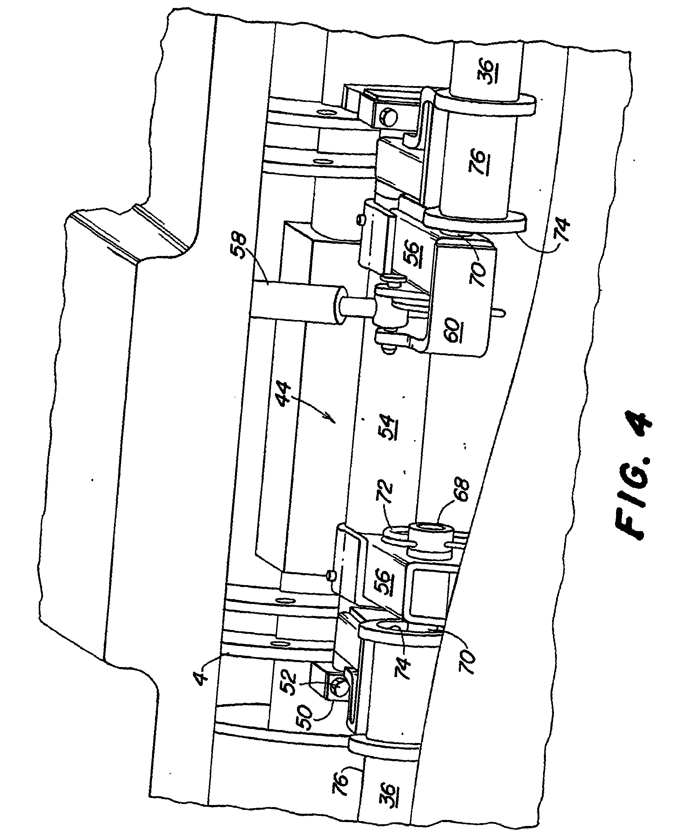

Die Figuren 3 und 4 zeigen einen typischen Grad von seitlicher Verschwenkung des Mähwerks 10, welche während eines Betriebs auftreten kann. Figur 3 zeigt eine seitliche Verschwenkung eines Mähwerks 10, wobei die rechte Seite (von einer Bedienungsperson aus gesehen) des Mähwerks 10 angehoben ist (zum Beispiel um der Kontur des Untergrunds zu folgen). Figur 4 zeigt die Stellung des Stützhebels 44 und der Freilaufkupplung 66, wenn das Mähwerk 10 eine seitliche Verschwenkung erfährt, wie sie in Fig. 3 gezeigt wird. Das Tragelement 70, das der rechten Seite des Mähwerks 10 zugeordnet ist (auf der linken Seite der Figur), greift an der Unterseite seiner entsprechenden Aussparung 74 an, während das andere Tragelement 70, das der linken Seite des Mähwerks 10 (auf der rechten Seite der Figur) zugeordnet ist, an der Oberseite seiner zugeordneten Öffnung 74 angeordnet ist. Daher kann eine weitere rechtsseitige Anhebung durch das Mähwerk 10 nicht über die Freilaufkupplung 66 erzielt werden, ohne daß die linke Seite um dasselbe oder ein größeres Maß angehoben wird.

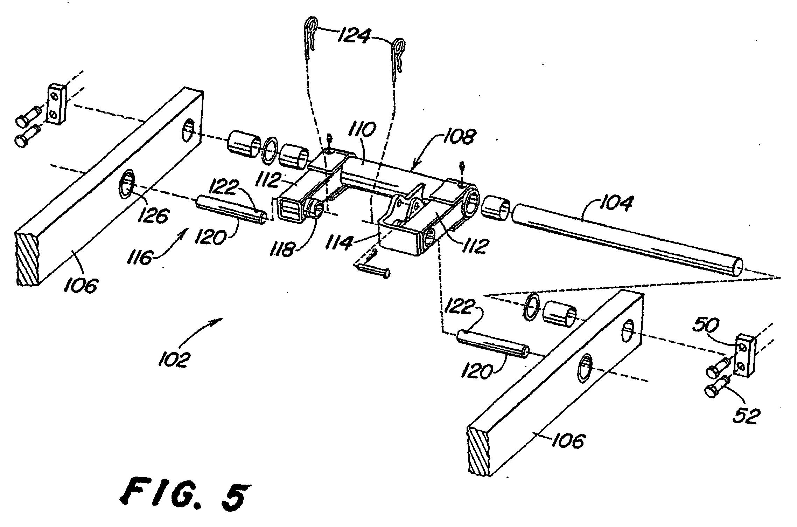

Eine alternative Ausführungsform der vorliegenden Erfindung wird in Fig. 5 gezeigt. Die Anbaugeräteaufhängung bzw. Aufhängung 102 aus Fig. 5 ist daran angepaßt, beispielsweise mit einer Anbaueinrichtung wie einem Frontmesser benutzt zu werden. Die Aufhängung 102 weist viele der gleichen Bauelemente wie die in den Fig. 1 - 4 gezeigte Aufhängung 40 auf, einschließlich einer querverlaufenden Schwenkwelle 104 über die zwei Tragarme 106 und ein C-förmiger Stützhebel 108 schwenkbar angebracht sind. Die Schwenkwelle 104 kann an dem Rahmen 4 eines angetriebenen Fahrzeugs 2 ähnlich befestigt sein.

Der Stützhebel 108 weist einen hohlen Basisbereich 110, welcher über die Schwenkwelle 104 geschoben werden kann, und zwei Seitenbereiche 112 auf, welche sich von der Schwenkwelle 104 nach vorne erstrecken. Ein Anhebemittel wie ein Hydraulikzylinder bzw. -motor (nicht dargestellt) von üblicher Bauart kann an einem Ende an einer Halterung 114 an einem der Seitenbereiche 112 des Stützhebels 108 und an seinem anderem Ende an dem Rahmen 4 des Fahrzeugs 2 angebracht sein.

An einem Ende jedes Tragarms 106, dem Ende des Tragarm 106 gegenüberliegend, das an der Schwenkwelle 104 angebracht ist, kann eine Kupplung von üblicher Bauart angebracht sein, um das Anbaugerät bzw. die Anbaueinrichtung mit den Tragarmen 106 zu verbinden.

Die Aufhängung 102 weist eine Freilaufkupplung 116 auf, um eine begrenzte unabhängige Bewegung jedes der Tragarme 106 mit Bezug auf den Stützhebel 108 zu erlauben. Die Freilaufkupplung 116 weist Aussparungen 118 in einem Bereich jedes der Seitenbereiche 112 des Stützhebels 108 auf, die von der Schwenkwelle 104 beabstandet sind, durch die ein Tragelement, ein Stift bzw. Bolzen 120, positioniert wird. Die Tragelemente 120 weisen jeweils eine Querbohrung 122 auf, durch die Sicherungsstifte 124 angeordnet werden, um die Tragelemente 120 an ihrem Platz zu halten. Eine vergrößerte Querbohrung 126 in einem angrenzenden Bereich jedes der Tragarme 106 erlaubt es den Tragelementen 120, von den Tragarmen 106 aufgenommen zu werden.

Die Freilaufkupplung 116 funktioniert wie die Freilaufkupplung 66, die mit Bezug auf die Figuren 1 - 4 beschrieben wurde, ein Verschwenken von Seite zu Seite erlaubend, außer daß die Stifte 120 mit vergrößerten Querbohrungen 126 in jedem der Tragarme 106 anstatt mit den Aussparungen 74, die in die sich seitlich erstreckenden Bereiche 76 der Tragarme 36 eingebracht sind, zusammenwirken.

Wiederum wird, wenn das Anhebemittel bzw. Verstellmittel zum Zwecke eines Anhebens der Anbaueinrichtung, betätigt wird, die erste Bewegung des Verstellmittels in einer Bewegung eines jeden der Tragelemente 120 in ihren entsprechenden Querbohrungen 126 resultieren, bis sie an dem Material der Tragarme 106 angreifen, wonach die Tragarme 106 um die Schwenkwelle 104 rotieren werden, wobei das angebrachte Anbaugerät bzw. die Anbaueinrichtung gleichmäßig angehoben wird.

Obwohl die Erfindung mit Bezug auf die gezeigten Ausführungsformen zur Verwendung mit an einer Vorderseite angebrachten Anbaueinrichtungen gezeigt wird, sollte es für den Fachmann deutlich sein, daß die Erfindung in der beschriebenen oder abgewandelten Form zur Benutzung in anderen Anwendungsfällen, in denen es gewünscht ist, die seitliche Verschwenkbarkeit eines aufgehängten Anbaugeräts zu erhöhen, vorteilhaft sein kann.

Beispielsweise kann das Tragelement 70, 120 der Freilaufkupplung 66, 116 sich von einem Tragarm 36, 106 in eine größere Aussparung des Stützhebels 44, 108 erstrecken, anstatt daß eine Hülse auf jedem der Tragarme 36, 106 angeordnet ist und der Stift 70, 120 an dem Stützhebel 44, 108 befestigt ist.

Die vorliegende Erfindung soll nicht auf die oben beschriebenen Ausführungsformen beschränkt sein, sondern sie soll nur durch die folgenden Ansprüche beschränkt werden.

## Patentansprüche

1. Aufhängung (40, 102) mit zumindest einem Tragarm (36, 106), der um eine erste Achse schwenkbar gelagert ist und durch zumindest eine Verstelleinrichtung in verschiedene Stellungen gebracht werden kann, mit zumindest einem Stützhebel (44, 108), der um die erste Achse schwenkbar gelagert ist und über von seiner Schwenkachse beabstandete Mittel mit dem Tragarm (36, 106) in Verbindung steht, die zumindest eine vertikale Relativbewegung des Tragarms (36, 106) bezogen auf den Stützhebel (44, 108) ermöglichen, **dadurch gekennzeichnet, daß** die Mittel zumindest zwei in vertikaler Richtung beabstandete Anschläge, sowie wenigstens ein Tragelement (70, 120) aufweisen, das zwischen diesen Anschlägen angeordnet ist.

2. Aufhängung nach Anspruch 1, **dadurch gekennzeichnet, daß** die Mittel zumindest einen weiteren Anschlag aufweisen, der von den ersten Anschlägen zumindest in horizontaler Richtung beabstandet ist.

3. Aufhängung nach einem oder mehreren der vorherigen Ansprüche, **dadurch gekennzeichnet, daß** die Mittel in der Art einer Hülse bzw. Aussparung (74, 126) mit einem von dieser aufnehmbaren Tragelement (70, 120) ausgebildet sind.

4. Aufhängung nach Anspruch 3, **dadurch gekennzeichnet, daß** zwischen der Hülse bzw. Aussparung (74, 126) und dem Tragelement (70, 120) ein Freiraum besteht.

5. Aufhängung nach einem oder mehreren der vorherigen Ansprüche, **dadurch gekennzeichnet, daß** die Verstelleinrichtung (58) an dem Stützhebel (44, 108) angreift.

6. Aufhängung nach einem oder mehreren der vorherigen Ansprüche, **dadurch gekennzeichnet, daß** die Aufhängung (40) zumindest zwei Tragarme (36, 106) aufweist.

7. Aufhängung nach Anspruch 6, **dadurch gekennzeichnet, daß** die Tragarme (36, 106) mit einem gemeinsamen Stützhebel (44, 108) zusammenwirken, der vorzugsweise zwischen den Tragarmen (36, 106) angeordnet ist.

8. Aufhängung nach einem oder mehreren der vorherigen Ansprüche, **dadurch gekennzeichnet, daß** die Tragarme (36, 106) zur vorzugsweise schwenkbaren und/oder höhenverstellbaren Aufnahme zumindest einer Anbaueinrichtung ausgebildet sind.

9. Arbeitsgerät bzw. Fahrzeug (2) mit einer Aufhängung (40, 102) nach einem oder mehreren der vorherigen Ansprüche, insbesondere ein Arbeitsgerät oder Fahrzeug zur Rasen-, Garten- und Grundstückspflege.

## Claims

1. A suspension (40, 102) with at least one support arm (36, 106) which is pivotally mounted about a first axis and can be brought into different positions by at least one positioning device, with at least one supporting lever (44, 108) which is pivotally mounted about the first axis and is coupled to the support arm (36, 108) through means spaced from its pivotal axis, which enable at least a vertical relative movement of the support arm (36, 106) in relation to the supporting lever (44, 108), **characterized in that** the means comprise at least two stops spaced in the vertical direction and at least one support element (70, 102) which is disposed between these stops.

2. A suspension according to claim 1, **characterized in that** the means comprise at least one further stop which is spaced in the horizontal direction from the first stops.

3. A suspension according to one or more of the preceding claims, **characterized in that** the means are in the form of a sleeve or recess (74, 126) with a support element (70, 120) which can be received thereby.

4. A suspension according to claim 3, **characterized in that** a free space is present between the sleeve or recess (70 120) and the support element (70, 120).

5. A suspension according to one or more of the preceding claims, **characterized in that** the positioning device (58) engages on the supporting lever (44, 108).

6. A suspension according to one or more of the preceding claims, **characterized in that** the suspension (40) comprises at least two support arms (36, 106).

7. A suspension according to claim 6, **characterized in that** the support arms (36, 106) cooperate with a common supporting lever (44, 108), which is preferably arranged between the support arms (36, 106).

8. A suspension according to one or more of the preceding claims, **characterized in that** the support arms (36, 106) are designed to receive at least one attachment preferably pivotally and/or adjustable in height.

9. An implement or vehicle (2) with a suspension (40, 102) according to one or more of the preceding claims, especially an implement or vehicle for care of lawns, gardens and plots of land.

## Revendications

1. Suspension (40, 102) comportant au moins un bras support (36, 106) qui est monté de manière pivotante autour d'un premier axe et peut être amené en différentes positions par au moins un dispositif de réglage, comportant au moins un levier d'appui (44, 108), qui est monté de manière pivotante autour du premier axe et est en liaison avec le bras support (36, 106) par des moyens situés à distance de son axe de pivotement, lesquels permettent au moins un déplacement relatif vertical du bras support (36, 106) par rapport au levier d'appui (44, 108), **caractérisée en ce que** les moyens présentent deux butées situées à distance dans la direction verticale ainsi qu'au moins un élément support (70, 120) qui est disposé entre ces butées.

2. Suspension selon la revendication 1, **caractérisée en ce que** les moyens présentent au moins une autre butée qui est située à distance des premières butées au moins dans la direction horizontale.

3. Suspension selon une ou plusieurs des revendications précédentes, **caractérisée en ce que** les moyens sont formés à la manière d'un manchon ou d'un évidement (74, 126) avec un élément support (70, 120) recevable par celui-ci.

4. Suspension selon la revendication 3, **caractérisée en ce qu'**un espace libre existe entre le manchon ou l'évidement (74, 126) et l'élément support (70, 120).

5. Suspension selon une ou plusieurs des revendications précédentes, **caractérisée en ce que** le dispositif de réglage (58) prend sur le levier d'appui (44, 108).

6. Suspension selon une ou plusieurs des revendications précédentes, **caractérisée en ce que** la suspension (40) présente au moins deux bras supports (36, 106).

7. Suspension selon la revendication 6, **caractérisée en ce que** les bras supports (36, 106) coopèrent avec un levier d'appui (44, 108) commun, lequel est disposé de préférence entre les bras supports (36, 106).

8. Suspension selon une ou plusieurs des revendications précédentes, **caractérisée en ce que** les bras supports (36, 106) sont formés pour recevoir, de préférence de manière pivotante et/ou réglable en hauteur, au moins un dispositif de montage.

9. Dispositif de travail ou véhicule (2) comportant une suspension (40, 102) selon une ou plusieurs des revendications précédentes, en particulier dispositif de travail ou véhicule pour l'entretien des pelouses, jardins et terrains.
